# EUROPÄISCHE PATENTSCHRIFT

(11) **EP 2 708 825 B1**
(45) Veröffentlichungstag und Bekanntmachung des Hinweises auf die Patenterteilung: **07.12.2016**
(21) Anmeldenummer: 12184096.1
(22) Anmeldetag: 12.09.2012
(51) Int. Cl.: F24D 19/10, F24D 3/10

(54) **Verfahren zum Steuern einer Umwälzpumpe in einer Anlage mit mindestens zwei Umwälzkreisen**
Method for controlling a circulating pump in an assembly with at least two circuits
Procédé de commande d'une pompe de recirculation dans une installation avec au moins deux circuits

(43) Veröffentlichungstag der Anmeldung: 19.03.2014
(73) Patentinhaber: Grundfos Holding A/S, 8850 Bjerringbro (DK)
(72) Erfinder: Byskov Skafsgaard, Martin, 8600 Silkeborg (DK); Døssing, Bent, 8600 Silkeborg (DK)
(74) Vertreter: Patentanwälte Vollmann & Hemmer

(56) Entgegenhaltungen:
- EP-A1- 1 323 984
- EP-A1- 2 224 175
- EP-A2- 0 460 399
- EP-A2- 0 953 808
- DE-A1- 4 127 822
- DE-C2- 19 525 887

## Beschreibung

Die Erfindung betrifft ein Verfahren zum Steuern einer Umwälzpumpe mit den im Oberbegriff des Anspruchs 1 angegebenen Merkmalen sowie eine Umwälzpumpe mit den im Oberbegriff des Anspruchs 12 angegebenen Merkmalen. Solch ein Verfahren bzw. eine Umwälzpumpe ist aus EP-A2-0953808 bekannt.

Bei modernen frequenzumrichtergesteuerten Kreiselpumpen, die ihren Betriebspunkt in weiteren Bereichen durch Drehzahländerung nahezu optimal an die Erfordernisse der Anlage anpassen können, zählt es zum Stand der Technik durch die Pumpe selbst, d. h. insbesondere durch in der Pumpe vorhandene Sensorik und/oder durch elektrische Größen des Antriebs, die frequenzumrichtigerseitig ohne weiteres zur Verfügung stehen, anlagenspezifische Anforderungen selbsttätig zu erkennen und die Pumpe entsprechend anzusteuern. Ein solches Verfahren bzw. eine solche Umwälzpumpe ist aus EP 1 323 984 A1 bekannt. Hierbei werden durch Erfassung einer verbraucherseitigen Verlaufscharakteristik des Förderdrucks oder der Fördermenge oder einer Größe, aus der letztere ableitbar sind, anlagentypische Ereignisse erfasst und die Pumpe drehzahlmäßig entsprechend angepasst. So kann die Pumpe ohne gesonderte Signalkommunikation mit der Heizungsanlage erkennen, wann der Wärmebedarf hoch ist und somit auch die Pumpenleistung hoch sein sollte und umgekehrt. Auch können Ereignisse, wie Nachtabsenkung, Sommer, Winter oder dergleichen pumpenseitig erfasst und somit bei der Ansteuerung der Pumpe entsprechend berücksichtigt werden. Derartige Umwälzpumpen, die ein solches Verfahren in der Steuerelektronik implementiert haben, sind inzwischen auf dem Markt verfügbar und können praktisch ohne jegliche Einstellung nach Einbau in die Heizungsanlage in Betrieb genommen werden. Sie adaptieren sich selbsttätig an die Heizungsanlage und finden anlagen- und situationsabhöngig ihren optimierten Betriebspunkt.

Dies funktioniert allerdings nur bedingt bei Heizungsanlagen oder auch anderen Anlagen, bei welchen zwei oder mehr Umwälzkreise vorgesehen sind, die über ein Umschaltventil mit der Pumpe verbunden werden. Derartige Umschaltventile zählen beispielsweise bei Kompaktheizungsanlagen zum Stand der Technik. Sie dienen dazu, die Umwälzpumpe, die normalerweise einen Primärwärmetauscher mit dem Heizkreis für die Raumheizung verbindet, dann wenn warmes Brauchwasser von einer Zapfstelle benötigt wird, durch Umschaltung mit einem Sekundärwärmetauscher, typischerweise einem Plattenwärmetauscher, zu verbinden, um dann die gesamte Heizleistung des Primärwärmetauschers diesem Sekundärwärmetauscher für die Brauchwassererwärmung zuzuführen. Dabei ist es dann erforderlich, die entsprechend den Anforderungen an die Raumheizung geregelte Umwälzpumpe auf eine höhere Leistung umzusteuern, um einen schnellen und intensiven Wärmetransport vom Primärwärmetauscher zum Sekundärwärmetauscher für die Brauchwassererwärmung sicherzustellen. Darüber hinaus sind auch Anwendungen denkbar, bei denen zwei oder mehr Umwälzkreise umzuschalten sind, beispielsweise bei Brauchwassererwärmungen, die mittels Sonnenkollektoren arbeiten und bei Nacht vom Sonnenkollektorkreis auf einen durch Brennstoff erwärmten Kreis umzuschalten.

Die Schaltventile zur Umschaltung zwischen zwei oder mehr Umwälzkreisen können grundsätzlich beliebig ausgebildet sein. Bei Kompaktheizungsanlagen hat sich allerdings ein Umschaltventil bewährt, bei welcher ein elektromotorisch gesteuerter Hebel wahlweise den einen oder anderen Heizkreis verschließt, wobei während des Umschaltens kurzzeitig beide Kreise geöffnet sind. Derartige Umschaltventile sind beispielsweise aus DE 197 51 515 A1 oder DE 197 17 799 C5 bekannt.

Aus EP-A2-0 953808 zählt eine Hydraulikbaugruppe zum Stand der Technik, die ein solches Umschaltventil aufweist. Um zu erfassen, wie das Umschaltventil zu betätigen und die Pumpe umzusteuern ist, ist in der dort beschriebenen Hydraulikbaugruppe ein Drucksensor vorgesehen, welcher den Druck in der Brauchwasserleitung erfasst, der bei Entnahme von Brauchwasser abfällt.

Vor diesem Hintergrund liegt der Erfindung die Aufgabe zugrunde, ein gattungsgemäßes Verfahren zum Steuern einer Umwälzpumpe so auszubilden, dass Umschaltvorgänge in der Anlage selbsttätig erkannt werden und die Pumpe selbsttätig umgesteuert wird, ohne dass eine signalführende Kommunikation mit der Steuerung der Anlage erforderlich ist. Im Weiteren soll eine Umwälzpumpe geschaffen werden, die selbsttätig Umschaltvorgänge der vorgenannten Art erkennt und die Pumpe entsprechend umsteuert.

Der verfahrensmäßige Teil dieser Aufgabe wird durch ein Verfahren mit den in Anspruch 1 angegebenen Merkmalen gelöst. Der vorrichtungsmäßige Teil durch eine Umwälzpumpe mit den in Anspruch 11 angegebenen Merkmalen. Vorteilhafte Ausgestaltungen der Erfindung sind in den Unteransprüchen, der nachfolgenden Beschreibung und der Zeichnung angegeben.

Das erfindungsgemäße Verfahren zum Steuern einer Umwälzpumpe in einer Anlage mit mindestens zwei Umwälzkreisen, bei welcher mittels eines Umschaltventils die Umwälzpumpe je nach Schaltstellung in den einen oder den anderen Umwälzkreis eingebunden wird, wobei die Pumpe je nach Schaltstellung des Umschaltventils unterschiedlich angesteuert wird, ist gemäß der Erfindung dadurch gekennzeichnet, dass der Umschaltvorgang durch Ermittlung des Druckverlaufs und/oder des Durchflussmengenverlaufs in der Pumpe oder einer davon abhängigen elektrischen Größe des die Pumpe antreibenden Motors erfasst und die Pumpe bei Erfassung eines solchen Umschaltvorgangs entsprechend umgesteuert wird.

Grundgedanke der Erfindung ist es somit, durch die hydraulischen Vorgänge in der Pumpe bzw. die daraus abgeleiteten elektrischen Größen des Motors dazu zu nutzen, den Umschaltvorgang des Umschaltventils zu erfassen, um dann die Pumpe selbsttätig so umzusteuern, dass sie in dem für den jeweiligen Umwälzkreis optimalen Betriebspunkt/Kennfeld läuft. Dieses Verfahren setzt natürlich die Kenntnis des hydraulischen Verhaltens des Umschaltventils voraus, kann jedoch in der Praxis recht einfach an vorhandene Ventilanordnungen angepasst werden, indem die Druck-/Strömungsverläufe vor, während und nach dem Umschalten erfasst und zur späteren Ermittlung des Schaltvorgangs herangezogen werden. Dies ist besonders einfach bei dem eingangs beschriebenen Umschaltventil in einer Heizungsanlage festzustellen, welches sich dadurch auszeichnet, dass während des Umschaltvorgangs kurzzeitig beide Umwälzkreise, also in einer Heizungsanlage sowohl der Heizkreis für die Raumheizung als auch der Heizkreis für die Brauchwassererwärmung gleichzeitig mit dem Primärwärmetauscher und der davor oder dahinter angeordneten Umwälzpumpe verbunden sind. Vor dem Schaltvorgang und nach dem Schaltvorgang hingegen ist einer der beiden Heizkreise verschlossen. Grundsätzlich ist es am einfachsten, diese hydraulischen Vorgänge in der Pumpe durch daraus abgeleitete elektrische Größen des Motors zu bestimmen. Allerdings kann beispielsweise bei Asynchronmotoren mittlerer Größe eine solche Bestimmung nicht immer über den gesamten Drehzahlbereich eindeutig erfolgen, weshalb es dann ggf. auch zweckmäßig sein kann, nur über einen Teilbereich der elektrischen Größen und über einen anderen Teilbereich ggf. ergänzend hydraulische Größen, beispielsweise den Druck oder Differenzdruck innerhalb der Pumpe zur Ermittlung des Umschaltvorganges zu nutzen.

Vorteilhaft wird nicht nur der Umschaltvorgang des Umschaltventils erfasst, sondern darüber hinaus auch die Schaltstellung des Ventils. Auch diese wird gemäß der Erfindung durch Ermittlung des Druckverlaufs und/oder des Durchflussmengenverlaufs in der Pumpe oder einer davon abhängigen elektrischen Größe des Motors erfasst. Die Erfassung der Schaltstellung hat zum einen den Vorteil, dass die Pumpe nach dem Einschalten selbsttätig den richtigen Betriebspunkt findet, zum anderen, dass die Pumpe bei einer fehlerhaften Ermittlung eines Umschaltvorganges, wie dies durch Systemstörungen auftreten kann, dies erkennt und selbsttätig wieder in die dem Schaltzustand angemessene Ansteuerung zurückfällt.

Besonders vorteilhaft ist das erfindungsgemäße Verfahren bei einer Umwälzpumpe für eine Heizungsanlage mit zwei Heizkreisen, einem für die Brauchwassererwärmung und einen für die Raumheizung anwendbar, da dann auch handelsübliche Pumpen, wie sie in Heizungsanlagen üblicherweise eingesetzt werden, für Mehrkreisheizungsanlagen Verwendung finden können, wie sie typischerweise in Heizthermen von Etagenheizungen und dergleichen Anwendung finden. Es können dann auch derartige Anlagen mit verbrauchsoptimierten Pumpen nachgerüstet werden, ohne dass es anlagenseitig einer Anpassung bedarf, was insbesondere bei älteren Anlagen, bei denen ein entsprechender technischer Support vom Anlagenhersteller nicht mehr zu erwarten ist, von Vorteil ist.

Um sowohl den Umschaltvorgang als auch die Schaltstellung zu erfassen, ist es zweckmäßig, den Druckverlauf und/oder den Durchflussmengenverlauf in der Pumpe oder einer davon abhängige elektrische Größe des Motors kontinuierlich, d. h. ständig zu erfassen. Zur Ermittlung des Umschaltvorgangs selbst ist es vorteilhaft die entsprechenden Größen (Druckverlauf, Durchflussmengenverlauf oder davon abhängige elektrische Größen des Motors) während des Umschaltvorgangs und/oder unmittelbar vor und nach dem Umschaltvorgang zu erfassen, da in diesem Zeitfenster hydraulische Änderungen erfolgen, welche für den Umschaltvorgang charakteristisch sind, wie dies weiter unten anhand eines Ausführungsbeispiels noch detailliert erläutert ist. Die Schaltstellung des Umschaltventils hingegen wird vorteilhaft durch den Verlauf der hydraulischen Größen, d. h. durch den Druckverlauf und/oder den Durchflussmengenverlauf oder eine davon abhängige elektrische Größe des Motors zwischen zeitlich aufeinanderfolgenden Umschaltvorgängen ermittelt. Unter unmittelbar vor und nach dem Umschaltvorgang im Sinne der Erfindung ist eine Zeit von bis zu 10 Sekunden vor oder nach dem Umschaltvorgang zu verstehen.

Grundsätzlich kann ein solcher Schaltvorgang durch für den Umschaltvorgang charakteristische hydraulische Eigenschaften ermittelt werden, die zwar in Grenzen von dem konstruktiven Aufbau des Umschaltventils abhängig sind, jedoch grundsätzlich auch unabhängig davon ermittelt werden können. Um die Zuverlässigkeit der Ermittlung zu erhöhen, ist es jedoch vorteilhaft, wenn der Druckverlauf oder Durchflussmengenverlauf bzw. der damit einhergehende Verlauf elektrischer Größen des Motors für den Umschaltvorgang bzw. für die Schaltstellung mit vorgegebenen charakteristischen Werten verglichen wird, um diese mit hoher Treffsicherheit zu erfassen. Die charakteristischen Werte können entweder durch Messung in der Anlage selbst und nachfolgende Abspeicherung ermittelt werden oder aber fabrikmäßig vorgegeben werden, wie dies zum Beispiel bei einer entsprechend ausgestatteten Heizungsumwälzpumpe für die vorbeschriebenen Umschaltventile zweckmäßig sein wird. Dabei ist es zweckmäßig, wenn bei der Überwachung der Schaltstellung mit dem erfindungsgemäßen Verfahren, dann, wenn einer von der ermittelten Schaltstellung abweichende Pumpensteuerung festgestellt wird, eine entsprechende Umschaltung in der Pumpensteuerung erfolgt, was vorteilhaft selbsttätig durch die Steuerung selbst erfolgen kann.

So kann für das eingangs beschriebene Schaltventil in einer Kompaktheizungsanlage die Schaltstellung für die Brauchwassererwärmung dadurch ermittelt werden, dass über die Zeit konstante Werte ermittelt werden. Bei der Brauchwassererwärmung verändert sich nach erfolgter Umschaltung, d. h. nach Einbindung der Umwälzpumpe in den Heizkreis zur Brauchwassererwärmung der hydraulische Widerstand nicht, da in diesem Kreis keine den Leitungswiderstand ändernden Armaturen vorgesehen sind. Darüber hinaus ist der Leitungswiderstand im Heizkreis für die Brauchwassererwärmung typischerweise deutlich geringer als der im Heizkreis für die Raumheizung, auch letzteres Merkmal kann zur Bestimmung der Schaltstellung herangezogen werden.

Die Schaltstellung für die Raumheizung hingegen wird typischerweise dadurch ermittelt, dass eine zeitliche Änderung der Werte festgestellt wird, beispielsweise der Durchflussmenge, da der Heizkreis für die Raumheizung meist eine Vielzahl von Ventilen, insbesondere auch temperaturabhängig gesteuerten Thermostatventilen aufweist, die den Leitungswiderstand und somit die daraus resultierenden hydraulischen Werte der in diesen Kreis eingegliederten Pumpe verändern.

Das erfindungsgemäße Verfahren wird vorteilhaft im Zusammenhang mit einer Umwälzpumpe mit einem drehzahlsteuerbaren Elektromotor und einer von diesem angetriebenen Kreiselpumpe mit einer Steuerung für die Drehzahlsteuerung des Motors angewendet. Dann ist die Steuerung auch zur Erfassung eines Umschaltvorgangs nach dem erfindungsgemäßen Verfahren vorgesehen und ausgebildet, nach welchem die Pumpe von der Förderung von dem einen Umwälzkreis in einen anderen und umgekehrt selbsttätig umgeschaltet wird.

Besonders vorteilhaft wird dies bei einer Heizungsumwälzpumpe für eine Heizungsanlage vorgesehen, bei der ein Umwälzkreis ein Heizkreis für die Raumheizung und der andere Umwälzkreis ein Heizkreis für die Brauchwassererwärmung ist. Wenn, was bei derartigen Pumpen heutzutage schon zum Stand der Technik zählt, der Motor drehzahlgesteuert ist, dann ist es vorteilhaft, wenn diese Steuerung zur Erfassung des Umschaltvorganges Teil der Steuerungs- und Regelungselektronik des Drehzahlstellers ist, vorzugsweise softwaremäßig in diese implementiert. Das erfindungsgemäße Verfahren kann dann durch ein einfaches Softwareupdate in vorhandenen Umwälzpumpen eingebracht werden. Als Drehzahlsteller wird vorzugsweise ein Frequenzumrichter eingesetzt.

Insbesondere bei den eingangs beschriebenen Heizungsumwälzpumpen, die selbsttätig ihren optimierten Betriebspunkt finden und die typischerweise neben dem geregelten Betrieb einen ungeregelten Betrieb zur Verfügung stellen, um dann, wenn ausnahmsweise im geregelten Betrieb Probleme auftreten, in den ungeregelten Betrieb geschaltet werden können, ist es vorteilhaft, dann eine solche Umwälzpumpe auch in ungeregelten Betriebszuständen mit einer Überwachung der Durchflussmengenverlaufs oder einer davon abhängigen elektrischen oder hydraulischen Größe auszustatten, um zumindest den Umschaltvorgang ermitteln zu können und damit die Pumpe in geeigneter Weise zum Betrieb in dem anderen Umwälzkreis ansteuern zu können.

Das erfindungsgemäße Umwälzpumpenaggregat weist vorteilhaft eine Steuer- und Regelelektronik auf, die eine selbsttätige Anpassung der Regelkurve an die Anlage durchführt, so wie dies beispielsweise aus DE 195 25 887 C2 bekannt ist. Ein so ausgestattetes Umwälzpumpenaggregat erkennt somit nicht nur den Schaltvorgang innerhalb der Anlage, sondern adaptiert selbsttätig an die Anlage, passt somit die Pumpe mit dem antreibenden Motor bestmöglich an die stationären Verhältnisse in der Anlage an.

Die Erfindung ist nachfolgend anhand eines in der Zeichnung dargestellten Ausführungsbeispiels näher erläutert. Es zeigen:
- Fig. 1: ein hydraulisches Schaltbild von zwei Umwälzkreisen, die mittels eines Umschaltventils wahlweise von einer Pumpe beaufschlagt werden,
- Fig. 2a: eine Pumpenkurve (QH-Diagramm),
- Fig. 2b: den Durchfluss durch die Pumpe über der Zeit,
- Fig. 3a: ein QH-Diagramm gemäß Fig. 2a in anderen Betriebspunkten,
- Fig. 3b: den Durchfluss über der Zeit in Darstellung nach Fig. 2b mit anderen Anlagenkennlinien,
- Fig. 4a: ein QH-Diagramm gemäß Fig. 2a in anderen Betriebspunkten und
- Fig. 4b: den Durchfluss über der Zeit in Darstellung nach Fig. 2b mit anderen Anlagenkennlinien.

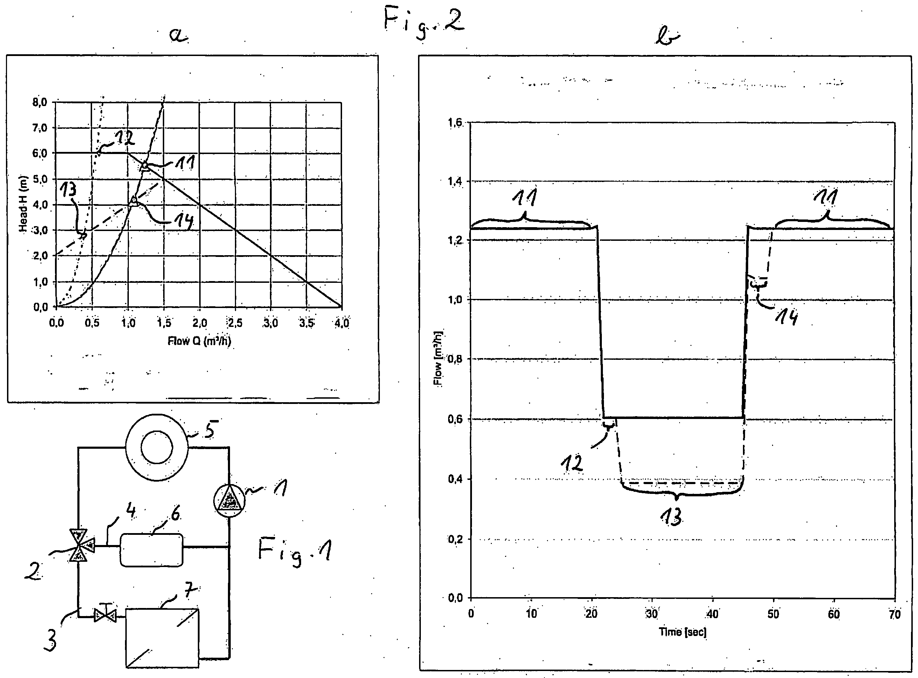

Anhand von Fig. 1 ist eine hier typische Anwendung des erfindungsgemäßen Verfahrens dargestellt, bei welchem eine Heizungsumwälzpumpe in Form einer frequenzumrichtergesteuerten Kreiselpumpe 1 je nach Schaltstellung eines Umschaltventils 2 entweder in einen Heizkreis 3 für die Raumheizung oder in einen Heizkreis 4 zur Brauchwassererwärmung speist. Hierzu wird das von der Pumpe angesaugt Wärmeträgermedium typischerweise Wasser zunächst einem Primärwärmetauscher 5 zugeführt, in welchem es erwärmt wird, von dort gelangt es zu dem Umschaltventil 2, welches in seiner Schaltstellung für die Raumheizung dieses in den Heizkreis 3 für die Raumheizung und von dort zurück wieder zur Pumpe 1 leitet, wie dies bei Heizungsanlagen üblich ist. Um mit nur einer Pumpe und nur einem Primärwärmetauscher 5 nicht nur die Raumheizung sondern auch Warmwasser bereiten zu können, ist der zweite Heizkreis 4 vorgesehen, der einen Plattenwärmetauscher 6 aufweist, in welchem das aus dem Primärwärmetauscher 5 kommende Wasser seine Wärme an das Brauchwasser abgibt. Hierzu wird das Umschaltventil 2 dann umgesteuert, wonach der Heizkreis 3 abgesperrt und der Heizkreis 4 geöffnet ist.

Bei dem Umschaltventil 2 handelt es sich um ein elektromotorisch gesteuertes Schaltventil, wie dies in Gaskompaktheizungsanlagen, beispielsweise Gasthermen, häufig eingesetzt wird und wie es beispielhaft in DE 197 51 515 A1 oder DE 197 17 799 C5 beschrieben ist. Dieses Umschaltventil 2 hat einen Schließkörper, der entweder den Zugang zu dem Heizkreis 3 oder den zu dem Heizkreis 4 verschließt. Um Druckschläge zu vermeiden, ist das Umschaltventil 2 so konstruiert, dass es während des Schaltvorgangs kurzzeitig die Zugänge zu beiden Heizkreisen 3 und 4 öffnet. Der Schaltvorgang dauert typischerweise zwischen ein und zwei Sekunden.

Die in solchen Heizungsanlagen eingesetzten Kreiselpumpen sind Nasslaufkreiselpumpen mit Asynchronmotor oder zunehmend auch mit Permanentmagnetmotoren, die von einem im Klemmenkasten des Motors angeordneten Frequenzumrichter drehzahlvariabel angesteuert werden. Dabei erfolgt die Ansteuerung je nach Schaltstellung des Umschaltventils 2 entweder für den Heizkreis 3 für die Raumheizung 7 meist mit reduzierter Leistung nur bei extremen Außentemperaturen mit voller Leistung, wohingegen die Ansteuerung der Pumpe 1 für den Heizkreis 4 zur Brauchwassererwärmung in der Regel so ist, dass die Pumpe 1 mit maximaler Leistung betrieben wird. Bei bekannten Anlagen dieser Art wird von der Steuerung der Heizungsanlage nicht nur das Umschaltventil 2 angesteuert sondern auch die Umwälzpumpe 1. Durch das erfindungsgemäße Verfahren ist letzteres nicht mehr erforderlich, da die Pumpe 1 selbsttätig sowohl den Umschaltvorgang als auch die Schaltstellung des Umschaltventiles 2 erfasst. Da die Daten und Betriebsfelder der Pumpe 1 bekannt sind, kann dies grundsätzlich durch Betriebspunkterfassung der Pumpe 1 bzw. des diese antreibenden Motors erfolgen, also beispielsweise anhand der elektrischen Daten des Motors oder des Differenzdrucks, der von der Pumpe aufgebracht wird oder der Durchflussmenge. Die physikalischen Zusammenhänge dieser Größen sind hinlänglich bekannt. Im Folgenden wird erläutert, wie mithilfe einer Durchflussmessung innerhalb der Pumpe diese Zustände erfasst werden:

Anhand der Figuren 2 - 4 sind in den Figuren 2b, 3b und 4b über einen Zeitraum von siebzig Sekunden der Durchfluss der Pumpe bei Anlagen unterschiedlicher Kennlinie dargestellt. Während das Durchflussverhalten über die Zeit in den Figuren b dargestellt ist, sind Anlage und Pumpenverhalten in den Figuren a in QH-Diagrammen dargestellt. Die entsprechenden Betriebspunkte 11 - 21 in den QH-Diagrammen 2a - 4a sind in den Durchflussdiagrammen 2b - 4b entsprechend gekennzeichnet.

Dabei ist zunächst in den ersten zwanzig Sekunden der Heizkreis 4 für die Brauchwassererwärmung beaufschlagt (Betriebspunkte 11, 15, 19), wonach eine Umsteuerung des Umschaltventils 2 erfolgt, wonach für etwa dreißig Sekunden der Heizkreis 3 für die Raumheizung mit der Umwälzpumpe 1 verbunden ist (Betriebspunkte 13, 17, 21), um dann wiederum nach Umsteuerung des Umschaltventils 2 für weitere zwanzig Sekunden die Umwälzpumpe 1 in den Heizkreis 4 für die Brauchwassererwärmung einzubinden (Betriebspunkte 11, 15, 19). Dabei ist in den Figuren b jeweils in durchgezogenen Linien dargestellt, wie sich der Durchfluss verhalten würde, wenn die Pumpe mit maximaler Leistung angesteuert würde, wie es zur Versorgung des Heizkreises 4 erforderlich wäre oder aber in unterbrochenen Linien bei einer Ansteuerung zur Versorgung des Heizkreises 3 mit gedrosselter Leistung.

Bei der anhand von Fig. 2 dargestellten Anlage ist der Durchflusswiderstand des Heizkreises 4 für die Brauchwassererwärmung deutlich geringer als der des Heizkreises 3 für die Raumheizung. Die in Fig. 2 in durchgezogener Linie dargestellte Kurve im QH-Diagramm ist die Maximalkurve der Pumpe, d. h. diese Kurve gibt die Fördermenge (Durchflussmenge) der Pumpe in Abhängigkeit der Förderhöhe (Druck) bei maximaler Leistung an. Auf dieser Kurve fährt die Pumpe wenn der Heizkreis 4 der Brauchwassererwärmung mit der Pumpe 1 verbunden ist und die Pumpe mit maximaler Leistung angesteuert wird (Betriebspunkt 11). Weiterhin sind in dem QH-Diagramm zwei vom Nullpunkt des Diagramms ausgehende Anlagenkennlinien des Heizkreises für die Raumheizung dargestellt sowie eine diese schneidende Proportionalitätskurve, welche den geregelten Betrieb der Pumpe darstellt, bei welchem Höhe und Fördermenge proportional bis zur Maximalkurve ansteigen.

Die in durchgezogener Linie dargestellte Kurve in Fig. 2b beginnt bei maximaler Leistung der Pumpe in der vorliegenden Anlage mit einer Durchflussmenge von 1,25 m³/h (Betriebspunkt 11), wenn das Umschaltventil 2 die Pumpe 1 in den Heizkreis 4 der Brauchwassererwärmung einbindet. Zu Beginn des Umschaltvorgangs nach ca. zwanzig Sekunden steigt zunächst die Durchflussmenge geringfügig an, da zu Beginn des Umschaltvorgangs zunächst die Leitungen zu beiden Heizkreisen 3 und 4 geöffnet werden, wonach die Leitung zum Heizkreis 4 verschlossen und die zum Heizkreis 3 vollständig geöffnet wird. Da der Heizkreis 3 für die Raumheizung hier einen deutlich höheren Leitungswiderstand als der für die Brauchwassererwärmung hat, fällt die Durchflussmenge bei maximaler Leistung der Pumpe 1 auf 0,6 m³/h ab (Betriebspunkt 12). Dieser steile Abfall der Durchflussmenge bei gleichbleibender Leistung der Pumpe dient als charakteristisches Kriterium für den Umschaltvorgang. Im vorliegenden Fall wird dies in der Pumpensteuerung erfasst, wonach die Pumpe mit einer Leistung angesteuert wird, die für den Betrieb der Raumheizung bestimmt ist und deren Durchflussmengenkurve in Fig. 2b in unterbrochener Linie dargestellt ist (Betriebspunkt 13). Durch die entsprechende Umsteuerung der Pumpe wird die Durchflussmenge dann von 0,6 m³/h in der Leistungsstufe für die Brauchwassererwärmung auf 0,4 m³/h in der Leistungsstufe für den Betrieb der Raumheizung reduziert. Ein weiterer Umschaltvorgang folgt auf der Zeitachse nach etwa 45 Sekunden. Das Umschaltventil öffnet, sodass beide Heizkreise 3, 4 mit der Pumpe 1 leitungsverbunden sind. Durch den dadurch bedingten geringeren Durchflusswiderstand steigt die Durchflussmenge in der Pumpe etwa auf 1,1 m³/h (Betriebspunkt 14). Diesen plötzlichen Durchflussmengenanstieg bei gleichbleibender Leistung erkennt die Steuerung als Umschaltvorgang und schaltet die Pumpe wieder auf Maximalleistung für den Brauchwassererwärmungsbetrieb um (Betriebspunkt 11), sodass die Pumpe von der bisherigen Durchflussmengen von 1,1 m³/h wieder auf für die Brauchwassererwärmung erforderliche Durchflussmenge von 1,2 m³ gesteuert wird. Wie das vorstehende Bespiel verdeutlicht, sind die Umschaltvorgänge ohne weiteres anhand des Durchflussmengenverlaufs der Pumpe zu identifizieren, die Steuerung der Pumpe wird entsprechend unmittelbar nach dem Registrieren des Umschaltvorgangs in der Steuerung anhand der Durchflussmessung umgesteuert. Hier erfolgt also die Ermittlung des Umschaltvorgangs anhand des Durchflussmengenverlaufs durch die Pumpe unmittelbar nach dem Umschaltvorgang.

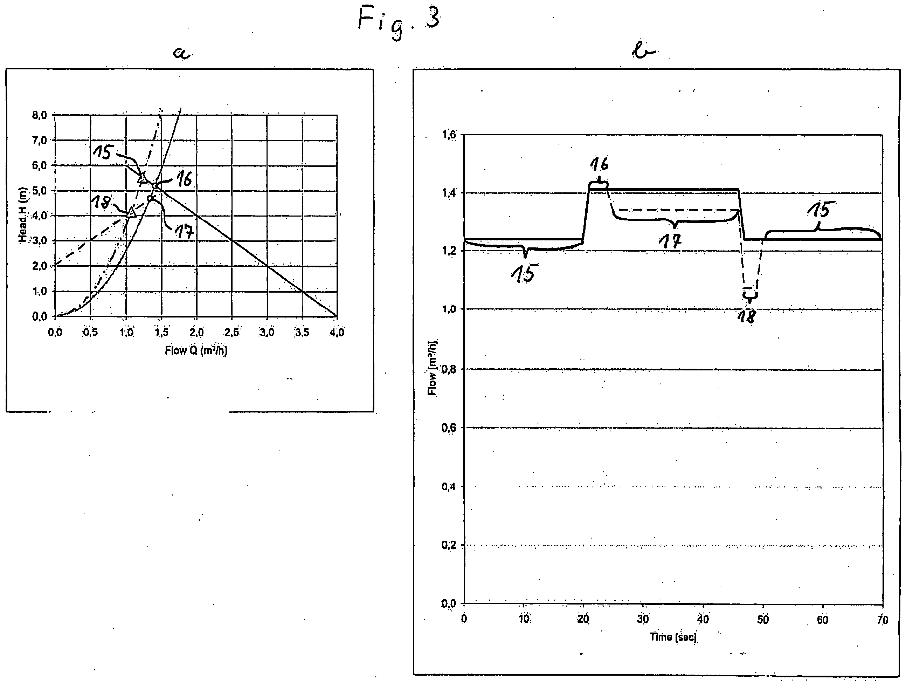

Anhand von Fig. 3 sind die gleichen Umschaltvorgänge wie vorstehend anhand von Fig. 2 erläutert einer Anlage dargestellt, bei welcher der Durchflusswiderstand des Heizkreises 4 für die Brauchwassererwärmung größer ist als der des Heizkreises 3 für die Raumheizung, wenn nämlich der Heizkreis 3 im Bypassbetrieb arbeitet. Daraus ergibt sich bei Durchflussverlauf der umgekehrte Fall, d. h. beim Umschaltvorgang nach zwanzig Sekunden vergrößert sich die Durchflussmenge von 1,25 m³/h auf 1,4 m³/h (Betriebspunkt 16). Der aufgrund des Öffnens beider Kreise kurzzeitig erfolgende Anstieg der Durchflussmenge geht hier unter in dem ohnehin gegebenen Anstieg nach dem Umschaltvorgang. Diese plötzliche Durchflussänderung erkennt das System und steuert unmittelbar danach die Pumpenleistung von dem Betrieb maximaler Leistung (durchgezogene Linie) für den Brauchwasserkreis 4 auf geregelte Leistung (unterbrochene Linie) für den Heizkreis 3, wodurch die Fördermenge, d. h. die Durchflussmenge durch die Pumpe abfällt (Betriebspunkt 17). Dann nach 45 Sekunden, wenn das Umschaltventil 2 erneut angesteuert wird, fällt die Durchflussmenge steil ab auf einen Wert von 1,1 m³/h (Betriebspunkt 18). Dieser Abfall wird als Schaltvorgang registriert, wonach die Pumpe wiederum in den Zustand maximaler Leistung (durchgezogene Linie) für die Beaufschlagung des Heizkreises 4 umgesteuert wird (Betriebspunkt 15). Wie das Beispiel nach Fig. 3 verdeutlicht, kann auch dieser Umschaltvorgang durch die charakteristische steile Durchflussmengenänderung unmittelbar nach dem Schaltvorgang erfasst werden.

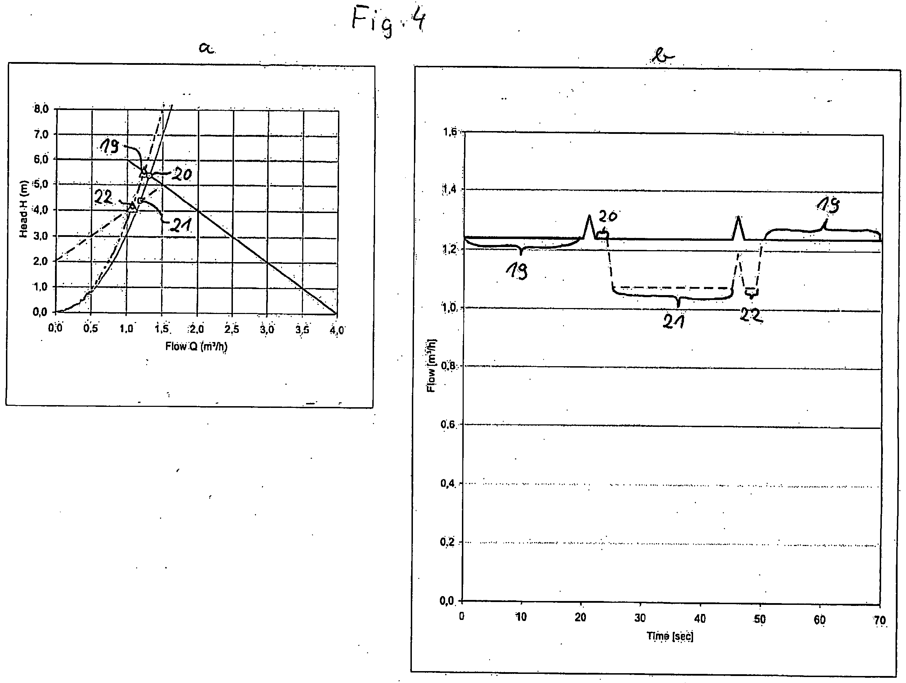

Wenn, was anhand von Fig. 4 dargestellt ist, der Durchflusswiderstand beider Heizkreise 3, 4 etwa gleich großist, dann ist die Erfassung nicht wie bei den vorstehenden Ausführungsbeispielen gemäß Fig. 2 und Fig. 3 durch den Durchflussmengenverlauf unmittelbar vor bzw. nach dem Umschaltvorgang möglich, sondern anhand der Durchflußmenge während des Umschaltvorgangs selbst. Dadurch, dass das Umschaltventil während des Öffnens kurzzeitig beide Heizkreise 3 und 4 mit der Pumpe 1 verbindet, sinkt der hydraulische Widerstand, wodurch die geförderte Menge kurzzeitig ansteigt. Dies ist in Fig. 4b durch die Spitze nach etwa zwanzig Sekunden sowie nachfolgend bei etwa 45 Sekunden sichtbar. Hier erfolgt eine entsprechende Umschaltung nach Erfassung des Umschaltvorgangs, wie anhand der unterbrochenen Linie dargestellt ist.

Darüber hinaus kann durch die zeitliche Erfassung der Durchflussmenge innerhalb der Pumpe auch der Schaltzustand des Umschaltventiles 2 erfasst werden. Wenn der Heizkreis 4 für die Brauchwassererwärmung eingeschaltet ist, d. h. die Umwälzpumpe 1 diesen ausschließlich beaufschlagt, dann wird sich über die Zeit abgesehen von dem Bereich unmittelbar vor und nach dem eigentlichen Umschaltvorgang keine Änderung im Durchfluss ergeben, da der hydraulische Widerstand dieses Heizkreises 4 stets gleich bleibt. Werden also Durchflussschwankungen innerhalb der Pumpe erfasst, so kann ermittelt werden, dass sich das Umschaltventil 2 in der Stellung zur Beaufschlagung des Heizkreises 3 für die Raumheizung befindet, da dieser aufgrund der darin typischerweise befindlichen Stellventile, insbesondere Thermostatventile und des sich regelmäßig ändernden Wärmebedarfs seinen hydraulischen Widerstand ändert, wodurch sich die Durchflussmenge ändert. Sobald dies pumpenseitig festgestellt wird, kann die Umrichterelektronik selbst die Pumpe so ansteuern, wie es zur Beaufschlagung des Heizkreises 3 für die Raumheizung vorgesehen ist, sollte die Pumpe versehentlich aufgrund eines Fehlers im anderen Modus betrieben werden. Auch im umgekehrten Fall kann eine Fehlsteuerung erfasst und gegebenenfalls durch eine Umsteuerung korrigiert werden, wobei hier das Zeitintervall, in welchem die Durchflussmessung verglichen wird, angemessen gewählt werden muss. Es muss einerseits so lang sein, dass die Veränderungen im Heizkreis 3 für die Raumheizung auftreten, andererseits jedoch so kurz, dass die Brauchwassererwärmung noch nicht abgeschlossen ist.

### Bezugszeichenliste

- 1: - Umwälzpumpe
- 2: - Umschaltventil
- 3: - Heizkreis für die Raumheizung
- 4: - Heizkreis für die Brauchwassererwärmung
- 5: - Primärwärmetauscher
- 6: - Plattenwärmetauscher
- 7: - Raumheizung
- 11 - 21: - Betriebspunkte der Pumpe

## Patentansprüche

1. Verfahren zum Steuern einer Umwälzpumpe (1) in einer Anlage mit mindestens zwei Umwälzkreisen (3, 4), bei welcher mittels eines Umschaltventils (2) die Umwälzpumpe (1) je nach Schaltstellung in den einen oder den anderen Umwälzkreis (3 oder 4) eingebunden wird, wobei die Pumpe (1) je nach Schaltstellung des Umschaltventils (2) unterschiedlich angesteuert wird, **dadurch gekennzeichnet, dass** der Umschaltvorgang des Umschaltventils (2) durch Ermittlung des Druckverlaufs und/oder des Durchflussmengenverlaufs in der Pumpe (1) oder einer davon abhängigen elektrischen Größe des die Pumpe (1) antreibenden Motors erfasst und die Pumpe (1) entsprechend umgesteuert wird.

2. Verfahren nach Anspruch 1, **dadurch gekennzeichnet, dass** die Schaltstellung des Umschaltventils (2) durch Ermittlung des Druckverlaufs und/oder des Durchflussmengenverlaufs in der Pumpe (1) oder einer davon abhängigen elektrischen Größe des Motors erfasst wird.

3. Verfahren nach einem der Ansprüche 1 oder 2, **dadurch gekennzeichnet, dass** die Umwälzpumpe (1) in einer Heizungsanlage mit zwei Heizkreisen (3, 4) einen für die Brauchwassererwärmung und einen für die Raumheizung angeordnet ist, in welcher mittels eines Umschaltventils (2) ein Primärwärmetauscher (5) mit dem einen oder dem anderen Heizkreis (3 oder 4) leitungsverbunden wird.

4. Verfahren nach einem der vorhergehenden Ansprüche, **dadurch gekennzeichnet, dass** der Druckverlauf und/oder der Durchflussmengenverlauf in der Pumpe (1) oder eine davon abhängige elektrische Größe des Motors kontinuierlich erfasst werden.

5. Verfahren nach einem der vorhergehenden Ansprüche, **dadurch gekennzeichnet, dass** der Umschaltvorgang anhand des Druckverlaufs und/oder des Durchflussmengenverlaufs oder einer davon abhängigen elektrischen Größe des Motors während des Umschaltvorgangs und/oder unmittelbar vor und nach dem Umschaltvorgang ermittelt wird.

6. Verfahren nach einem der vorhergehenden Ansprüche, **dadurch gekennzeichnet, dass** die Schaltstellung anhand des Druckverlaufs und/ oder des Durchflussmengenverlaufs oder einer davon abhängigen elektrischen Größe des Motors zwischen zeitlich aufeinanderfolgenden Umschaltvorgängen ermittelt wird.

7. Verfahren nach einem der vorhergehenden Ansprüche, **dadurch gekennzeichnet, dass** der Druckverlauf oder der Durchflussmengenverlauf mit vorgegebenen charakteristischen Werten für den Umschaltvorgang verglichen wird und anhand des Vergleichs der Umschaltvorgang ermittelt wird.

8. Verfahren nach einem der vorhergehenden Ansprüche, **dadurch gekennzeichnet, dass** der Druckverlauf oder der Durchflussmengenverlauf mit vorgegebenen charakteristischen Werten für die Schaltstellung verglichen wird und anhand des Vergleichs die Schaltstellung ermittelt wird.

9. Verfahren nach einem der vorhergehenden Ansprüche, **dadurch gekennzeichnet, dass** anhand des Druckverlaufs oder des Durchflussmengenverlaufs oder einer davon abhängigen elektrischen Größe des Motors die Schaltstellung überwacht wird und dass bei Ermittlung einer Schaltstellung abweichend von der in der Steuerung vorgegebenen eine Umschaltung in der Steuerung selbsttätig durchgeführt wird.

10. Verfahren nach einem der vorhergehenden Ansprüche, **dadurch gekennzeichnet, dass** die Schaltstellung Brauchwassererwärmung bei zeitlich konstanten Werten festgestellt wird.

11. Verfahren nach einem der vorhergehenden Ansprüche, **dadurch gekennzeichnet, dass** die Schaltstellung Raumheizung bei sich zeitlich ändernden Werten festgestellt wird.

12. Umwälzpumpenaggregat für eine Anlage mit mindestens zwei Umwälzkreisen (3,4), mit einem drehzahlsteuerbaren Elektromotor, einer von diesem angetrieben Kreiselpumpe (1) und mit einer Steuerung für die Drehzahlsteuerung des Motors, **dadurch gekennzeichnet, dass** die Steuerung auch zur Erfassung eines Umschaltvorgangs eines Umschaltventils (2) nach einem Verfahren nach einem der Ansprüche 1 bis 11 vorgesehen und ausgebildet ist, bei welchem der Umschaltvorgang des Umschaltventils (2) durch Ermittlung des Druckverlaufs und/oder des Durchflussmengenverlaufs in der Pumpe (1) oder einer davon abhängigen elektrischen Größe des die Pumpe (1) antreibenden Motors erfasst und die Pumpe (1) entsprechend umgesteuert wird und dass die Steuerung dafür ausgebildet ist, dass die Pumpe (1) zur Förderung in den einen Umwälzkreis (3) in den anderen (4) und umgekehrt selbsttätig umgeschaltet und je nach Schaltstellung des Umschaltventils unterschiedlich angesteuert wird.

13. Umwälzpumpenaggregat nach Anspruch 12, **dadurch gekennzeichnet, dass** die Kreiselpumpe (1) eine Heizungsumwälzpumpe ist und dass ein Umwälzkreis ein Heizkreis (3) für die Raumheizung und der andere Umwälzkreis ein Heizkreis (4) für die Brauchwassererwärmung ist.

14. Umwälzpumpenaggregat nach Anspruch 12 oder 13, **dadurch gekennzeichnet, dass** der Motor drehzahlgesteuert ist und dass die Steuerung zur Erfassung des Umschaltvorgangs Teil der Steuer- und Regelungselektronik des Drehzahistellers bildet, vorzugsweise softwaremäßig in diese implementiert ist.

15. Umwälzpumpenaggregat nach einem der vorhergehenden Ansprüche, **dadurch gekennzeichnet, dass** die Steuerung sowohl in den geregelten als auch in ungeregelten Betriebszuständen der Pumpe den Durchflussmengenverlauf oder davon abhängige elektrische oder hydraulische Größen überwacht.

16. Umwälzpumpenaggregat nach einem der vorhergehenden Ansprüche, **dadurch gekennzeichnet, dass** eine Steuer- und Regelelektronik vorgesehen ist, welche eine selbsttätige Anpassung der Regelkurve an die Anlage durchführt.

## Claims

1. A method for controlling a circulation pump (1) in a facility with at least two circulation circuits (3, 4), with which the circulation pump (1) by way of a switch-over valve (2) is integrated into the one or the other circulation circuit (3 or 4) depending on the switched position, wherein the pump (1) is activated differently depending on the switched position of switch-over valve (2), **characterised in that** the switch-over procedure of the switch-over valve (2) is detected by way of determining the pressure course and/or the flow rate course in the pump (1), or an electrical variable which is dependent thereon, of the motor driving the pump, and the pump (1) is operated in another manner accordingly.

2. A method according to claim 1, **characterised in that** the switched position of the switch-over valve (2) is detected by way of determining the pressure course and/or the flow rate course in the pump (1) or an electrical variable of the motor which is dependent thereon.

3. A method according to one of the claims 1 or 2, **characterised in that** the circulation pump (1) is arranged in a heating facility with two heating circuits (3, 4), one for the service water heating and one for the room heating, in which facility a primary heat exchanger (5) is conductively connected to the one or the other heating circuit (3 or 4) by way of a switch-over valve (2).

4. A method according to one of the preceding claims, **characterised in that** the pressure course and/or flow rate course in the pump (1), or an electrical variable of the motor which is dependent thereon, is continuously detected.

5. A method according to one of the preceding claims, **characterised in that** the switch-over procedure is determined by way of the pressure course and/or the flow rate course, or of an electrical variable of the motor which is dependent thereon, during the switch-over procedure and/or directly before and after the switch-over procedure.

6. A method according to one of the preceding claims, **characterised in that** the switched position is determined by way of the pressure course and/or the flow rate course, or of an electrical variable of the motor which is dependent thereon, between temporally consecutive switch-over procedures.

7. A method according to one of the preceding claims, **characterised in that** the pressure course or flow rate course is compared with predefined characteristic values for the switch-over procedure, and the switch-over procedure is determined by way of the comparison.

8. A method according to one of the preceding claims, **characterised in that** the pressure course or flow rate course is compared with predefined characteristic values for the switched position, and the switched position is determined by way of the comparison.

9. A method according to one of the preceding claims, **characterised in that** the switched position is monitored by way of the pressure course or of the flow rate course or of an electrical variable of the motor which is dependent thereon, and that a switch-over is carried out automatically in the control when determining a switched position which is different from that predefined in the control.

10. A method according to one of the preceding claims, **characterised in that** the switched position for service water heating is ascertained given temporally constant values.

11. A method according to one of the preceding claims, **characterised in that** the switched position for room heating is ascertained given temporally changing values.

12. A circulation pump assembly for a facility with at least two circulation circuits (3, 4), with a speed-controllable electric motor, with a centrifugal pump (1) driven by this and with a control for the speed control of the motor, **characterised in that** the control is provided and designed also for the detection of a switch-over procedure of a switch-over valve (2) according to a method according to one of the claims 1 to 11, with which the switch-over procedure of the switch-over valve (2) is detected by way of determining the pressure course and/or the flow rate course in the pump (1) or an electrical variable which is dependent thereon, of the motor driving the pump (1), and the pump (1) is accordingly operated in another manner and that the control is designed for the pump to be automatically switched from the delivery into the one heating circuit (3) to delivery into the other (4) and to be activated differently depending on the switched position of the switch-over valve.

13. A circulation pump assembly according to claim 12, **characterised in that** the circulation pump (1) is a heating circulation pump and that one circulation circuit is a heating circuit (3) for room heating and the other circulation circuit is a heating circuit (4) for service water heating.

14. A circulation pump assembly according to claim 12 or 13, **characterised in that** the motor is speed-controlled and that the control for the detection of the switch-over procedure forms part of the control and regulation electronics of the speed controller, is preferably implemented into this with regard to software.

15. A circulation pump assembly according to one of the preceding claims, **characterised in that** the control monitors the flow rate course or electrical or hydraulic variables dependent thereon, in the regulated operating conditions as well as in the unregulated operating conditions of the pump.

16. A circulation pump assembly according to one of the preceding claims, **characterised in that** control and regulation electronics are provided, which carry out an automatic adaptation of the regulating curve to the facility.

## Revendications

1. Procédé de commande d'une pompe de circulation (1) dans une installation dotée d'au moins deux circuits de recirculation (3, 4), dans laquelle la pompe de circulation (1) est reliée, au moyen d'une soupape d'inversion (2) et selon la position de commutation, à l'un ou l'autre circuit de commutation (3 ou 4), la pompe (1) étant commandée différemment selon la position de commutation de la soupape d'inversion (2), **caractérisé en ce que** l'opération de commutation de la soupape d'inversion (2) est détectée par détermination de la courbe de pression et/ou de la courbe de débit dans la pompe (1) ou d'une grandeur électrique, dépendante de celles-ci, du moteur entraînant la pompe (1), et **en ce que** la pompe (1) est commandée en conséquence.

2. Procédé selon la revendication 1, **caractérisé en ce que** la position de commutation de la soupape d'inversion (2) est détectée par détermination de la courbe de pression et/ou de la courbe de débit dans la pompe (1) ou d'une grandeur électrique du moteur dépendante de celles-ci.

3. Procédé selon l'une des revendications 1 ou 2, **caractérisé en ce que** la pompe de circulation (1) est disposée dans une installation de chauffage dotée de deux circuits de chauffage (3, 4), un pour le chauffage d'eau sanitaire et l'autre pour le chauffage de locaux, dans laquelle un échangeur de chaleur primaire (5) est relié par conduit à l'un ou l'autre circuit de chauffage (3 ou 4) au moyen d'une soupape d'inversion (2).

4. Procédé selon l'une des revendications précédentes, **caractérisé en ce que** la courbe de pression et/ou la courbe de débit dans la pompe (1) ou une grandeur électrique du moteur dépendante de celles-ci sont détectées en continu.

5. Procédé selon l'une des revendications précédentes, **caractérisé en ce que** l'opération de commutation est déterminée à l'aide de la courbe de pression et/ou de la courbe de débit ou d'une grandeur électrique du moteur dépendante de celles-ci pendant l'opération de commutation et/ou immédiatement avant ou après l'opération de commutation.

6. Procédé selon l'une des revendications précédentes, **caractérisé en ce que** la position de commutation est déterminée au moyen de la courbe de pression et/ou de la courbe de débit ou d'une grandeur électrique du moteur dépendante de celles-ci entre des opérations de commutation se succédant dans le temps.

7. Procédé selon l'une des revendications précédentes, **caractérisé en ce que** la courbe de pression ou la courbe de débit est comparée à des valeurs caractéristiques prédéterminées pour l'opération de commutation, et l'opération de commutation est déterminée à l'aide de la comparaison.

8. Procédé selon l'une des revendications précédentes, **caractérisé en ce que** la courbe de pression ou la courbe de débit est comparée à des valeurs caractéristiques prédéterminées pour la position de commutation, et la position de commutation est déterminée à l'aide de la comparaison.

9. Procédé selon l'une des revendications précédentes, **caractérisé en ce que** la position de commutation est surveillée à l'aide de la courbe de pression ou de la courbe de débit ou d'une grandeur électrique du moteur dépendante de celles-ci et **en ce qu'**en cas de détermination d'une position de commutation s'écartant de celle prédéterminée dans la commande, une commutation s'opère automatiquement dans la commande.

10. Procédé selon l'une des revendications précédentes, **caractérisé en ce que** la position de commutation « chauffage d'eau sanitaire » est observée en présence de valeurs constantes dans le temps.

11. Procédé selon l'une des revendications précédentes, **caractérisé en ce que** la position de commutation « chauffage de locaux » est observée en présence de valeurs variables dans le temps.

12. Groupe motopompe de circulation pour une installation dotée d'au moins deux circuits de recirculation (3, 4), comprenant un moteur électrique à vitesse de rotation réglable, une pompe centrifuge (1) entraînée par celui-ci et une commande pour la commande de vitesse de rotation du moteur, **caractérisé en ce que** la commande est également prévue et conçue pour la détection d'une opération de commutation d'une soupape d'inversion (2) selon un procédé selon l'une des revendications 1 à 11, où l'opération de commutation de la soupape d'inversion (2) est détectée par détermination de la courbe de pression et/ou de la courbe de débit dans la pompe (1) ou d'une grandeur électrique, dépendante de celles-ci, du moteur entraînant la pompe (1), et où la pompe (1) est inversée en conséquence, et **en ce que** la commande est conçue pour que la pompe (1) soit commutée automatiquement pour le transfert d'un circuit de recirculation (3) dans l'autre (4) et inversement, et est commandée différemment en fonction de la position de commutation de la soupape d'inversion.

13. Groupe motopompe de circulation selon la revendication 12, **caractérisé en ce que** la pompe centrifuge (1) est une pompe de circulation de chauffage et **en ce qu'**un circuit de recirculation est un circuit de chauffage (3) pour le chauffage de locaux et l'autre circuit de recirculation est un circuit de chauffage (4) pour le chauffage d'eau sanitaire.

14. Groupe motopompe de circulation selon la revendication 12 ou 13, **caractérisé en ce que** le moteur est asservi en vitesse et **en ce que** la commande de détection de l'opération de commutation fait partie de l'électronique de commande et de régulation du variateur de vitesse et, de préférence, est mise en oeuvre dans celle-ci par un logiciel.

15. Groupe motopompe de circulation selon l'une des revendications précédentes, **caractérisé en ce que**, dans les états de fonctionnement asservis ou non asservis de la pompe, la commande surveille la courbe de débit ou des grandeurs électriques ou hydrauliques qui en dépendent.

16. Groupe motopompe de circulation selon l'une des revendications précédentes, **caractérisé en ce qu'**est prévue une électronique de commande et de régulation qui exécute une adaptation automatique de la courbe de régulation sur l'installation.
